# EUROPEAN PATENT APPLICATION

(11) **EP 0 549 129 A1**
(43) Date of publication of application: **30.06.1993**
(21) Application number: 92310671.0
(22) Date of filing: 23.11.1992
(51) Int. Cl.: H04N 7/173

(54) **Feeder switch for a bidirectional cable television system**

(30) Priority: 23.12.1991 US 811634
(71) Applicant: AT&T Corp., New York, NY 10013-2412 (US)
(72) Inventor: Atkinson, Lowell Gene, Indianapolis, Indiana 46250 (US); Katz, Ronald Lee, Indianapolis, Indiana 46220 (US)
(74) Representative: Buckley, Christopher Simon Thirsk

(57) **Abstract**

A two-way cable television (CATV) system includes a cable for transmitting television signals downstream, from a headend (connected to port 50) to a subscriber, (connected to port 10 for example) in the VHF frequency band, and for transmitting signals upstream, from the subscriber to the headend, in the frequency band below VHF. A feeder switch (50) is series-connected with the cable through a pair of input/output ports (10,50). These ports are normally interconnected by a high pass filter (510) to preclude the transmission of electrical signals in the upstream frequency band. However, circuitry (520,530,550) within the feeder switch detects upstream transmission and, in response, replaces the high pass filter with a direct connection (580) between the ports to enable both upstream and downstream transmission. Since each subscriber is connected to the cable via the feeder switch, thermal noise does not accumulate in the upstream direction from subscribers (most of them) who are not presently transmitting.

## Description

### Technical Field

This invention relates to cable television systems, and in particular to apparatus that improves the quality of simultaneous, two-way transmission of television signals.

### Background of the Invention

Cable television (CATV) systems have grown in popularity for a number of reasons since they were first introduced. For one, the number of entertainment channels that can be offered to a subscriber is greater than is available from local broadcast stations; and for another, it is more efficient, and hence economical, to distribute multiple television signals over cable than to have subscribers purchase sophisticated antenna systems individually. Despite complaints of overcharging by cable television providers, CATV continues to grow in popularity.

Distribution of cable television signals is relatively straight forward. At the headend (tower site) of the CATV system, individual channels are received, processed, combined and connected electrically to a transmission line (coaxial cable) which carries these signals downstream (toward the subscriber) who may be miles away. Along the way, amplifiers are needed to compensate for the logarithmic loss of the cable plus the flat loss of the splitters and directional couplers that are used to distribute these signals to multiple destinations. The downstream channels are frequency multiplexed into a frequency band 50-450 MHz. In the downstream cable distribution system, the noise contribution of the amplifiers (noise figure) increases by 3 dB each time the number of amplifiers is doubled in the path that extends from the cable headend to a particular subscriber. Noise buildup due to amplifier noise figure limits the number of amplifiers that can be placed in cascade and still maintain acceptable signal quality. Typically the maximum number of cascaded amplifiers does not exceed 50 in order to maintain a carrier-to-noise ratio of 49 dB. A trunk of this length may serve as many as 10,000 subscribers. There is no restriction on the number of separate trunks that can originate from the headend.

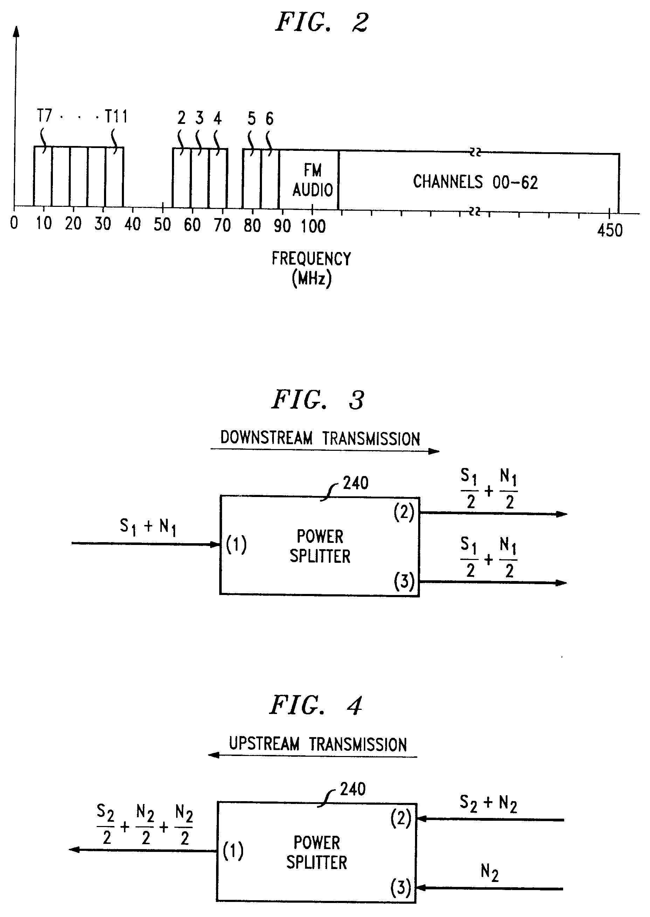

With so much cable already in place, it would occasionally be required as part of a municipal franchise agreement (or just good business practice) to transmit signals from a remote location back to the headend and then distribute the information/entertainment to all subscribers. This has been accomplished using various different frequency bands: sub-split (5-30 MHz); mid-split (5-108 MHz); or high-split (150-550 MHz). A subscriber that has a video camera may wish to transmit a TV picture to another cable subscriber. Such a system would require that the camera signal (video) be used to modulate a carrier whose frequency is consistent with frequency band selected for upstream transmission, and then modulated onto a selected downstream carrier and transmitted to all subscribers. However, bidirectional usage of the cable system presents certain complications due to cumulative noise buildup. In the downstream direction, splitters provide the same loss to both signal and noise, so the signal-to-noise ratio does not change. However, in the upstream direction splitters operate as combiners; so the upstream signal is attenuated 3 dB (plus any dissipation loss in the splitter) while noise is only attenuated by dissipation losses because noise enters two ports. The result is a 3 dB degradation in signal-to-noise ratio when two inputs with equal noise are combined in a splitter. More will be said about this later in connection with FIG. 3 and 4. Due to this inherent problem, bidirectional CATV has not achieved widespread acceptance.

Accordingly, it is desirable to provide simultaneous upstream and downstream television transmission over conventional cable systems. Furthermore, it is desirable to provide such upstream transmission without the noise buildup associated with present day systems.

### Summary of the Invention

In accordance with the invention, a feeder switch for a bidirectional cable television system includes a pair of ports. The ports are normally interconnected by a filter that passes downstream signals, in a first frequency band, to individual subscribers. This filter does not pass frequencies in a second frequency band where upstream transmission is allowed. However, in response to a predetermined control signal which is sent to the feeder switch when one of the subscribers wishes to transmit upstream, a low impedance path (direct connection) is interconnected between the ports to pass signals in the second frequency band. Therefore, paths are selectively granted to individual subscribers for upstream transmission while noise in the second frequency band is blocked from all other subscribers. Accordingly, there is no cumulative noise buildup in the upstream direction which has, heretofore, made two-way television transmission less than ideal over existing cable systems.

In an illustrative embodiment of the invention, the filter is a high pass section that passes signals in the VHF (50-450 MHz) band but not in the sub-low frequency (5-37 MHz) band. This filter is replaced with a direct connection when the subscriber station, associated with the feeder switch, is transmitting upstream.

The illustrative embodiment further includes signal detection circuitry for detecting signal energy in the upstream frequency band; in particular, the carrier signal of the upstream TV signal is detected and used to activate a diode switch which passes both upstream and downstream signals. Thus, the present invention leads to interactive video communication over cable television equipment. Since upstream signals can be live (video camera) or already on tape, business and social meetings - as well as entertainment and educational information - can now be transmitted by any CATV subscriber. The upstream signals are high quality, low-noise signals that can be received by one or more other CATV subscribers using their television receiver.

### Brief Description of the Drawing

The invention and its mode of operation will be more clearly understood from the following detailed description when read with the appended drawing in which:
FIG. 1 discloses the major functional elements of a CATV system, capable of upstream and downstream transmission in accordance with the invention;
FIG. 2 illustrates the assignment of frequency bands to various CATV channels;
FIG. 3 discloses the effect that a power splitter has on a downstream signal and associated noise;
FIG. 4 discloses the effect that a power splitter has on an upstream signal and associated noise;
FIG. 5 discloses a feeder switch including switched filters for interconnecting four subscribers to the cable system, each subscriber being capable of upstream TV signal transmission; and
FIG. 6 discloses a detailed schematic of a switched filter in accordance with the invention.

### Detailed Description

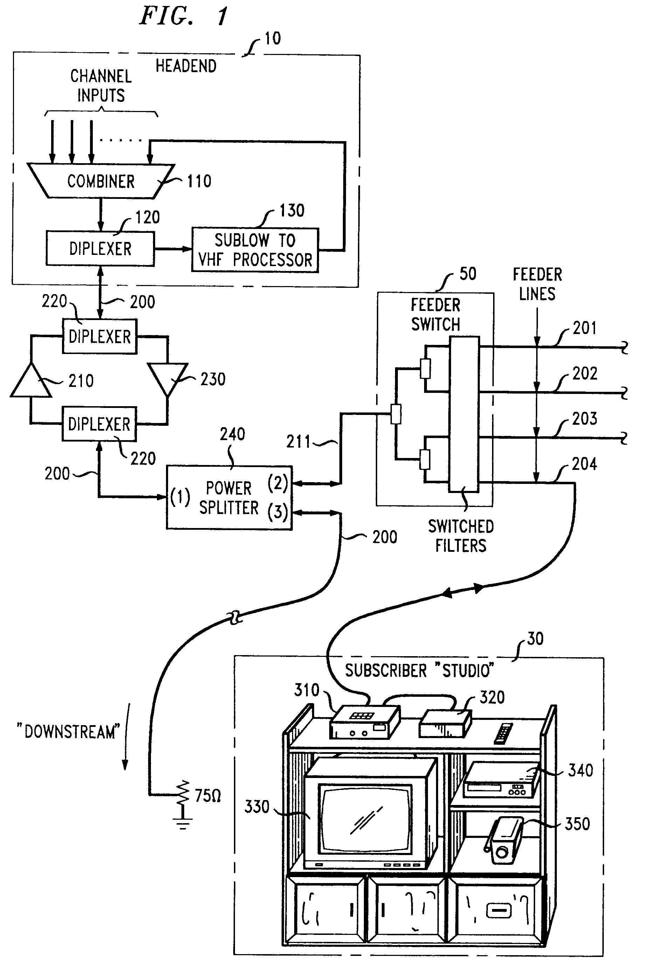

Cable television (CATV) systems typically include a central master source (headend) of television programming information which transmits programs, at different assigned frequencies, over a coaxial cable to a plurality of subscribers at business or residential locations. FIG. 1 discloses an overview of the major functional elements in a CATV system in accordance with the present invention. Television (TV) signals are slotted into various frequency bands (channels) at headend 10 for transmission over cable facilities to subscriber premises 30. At the subscriber premises, the TV signals are displayed on conventional television set 330. CATV program signals are broadcast from the headend to the subscribers in a "downstream" direction at a number of different assigned carrier frequencies in the VHF frequency band (approximately 50-450 MHz). In a bidirectional (two-way) system, transmission from subscriber premises 30 to the headend 10 in the "upstream" direction occurs over a smaller number of different assigned carrier frequencies in the sub-low frequency band (5-37 MHz) in the case of sub-split, 5-108 MHz in the case of mid-split, and 150-550 MHz in the case of high-split. In the preferred embodiment, the sub-low frequency band is selected. The present invention enables the subscriber to engage in such upstream transmission using his video camera 350 or his video cassette recorder (VCR) 340. TV signals from these devices are delivered to transmitting device 310 which, in the upstream direction, multiplexes a standard TV signal into one of the channels in the sub-low frequency band designated T8, T9, T10 or T11 and discussed hereinafter. Permission for an individual subscriber to engage in upstream transmission is granted by the headend. Additionally, the particular channel to be used is also designated by the headend which causes transmitting device 310 to broadcast on channel T8, T9, T10 or T11. Although not shown in FIG. 1, headend 10 includes control equipment that communicates with the downstream subscribers over a data channel in the 106-113 MHz frequency band. Upstream data communication on the T7 channel allows the subscriber to make certain program requests and to transmit status or identification information as required. Since it is not directly relevant to the present invention, it is sufficient to say that two-way data communication exists between each subscriber and the headend. Such data communication gives the headend a degree of control over the ability of each subscriber to transmit and receive TV signals. Additionally, transmitting device 310 includes descrambling apparatus for receiving certain TV signals - for example, a private video telephone conversation from a distant caller, or a local sports event for viewing by a select group of CATV subscribers. CATV converter 320 is a well-known device which converts one of the downstream TV signals into the frequency band assigned to channel 3 (60-66 MHz) or channel 4 (66-72 MHz).

Reference is now made to headend 10 for a brief description of its functions. Combiner 110 receives the individual channels from their modulators, processors, etc. and combines them into a single output for delivery to coaxial cable 200. Channel inputs may come from different sources including satellite dishes and/or other cable systems. The output of the combiner 110 is a frequency multiplexed signal which is input to diplexer 120. A diplexer is a directional filter that routes signals in one frequency band to one destination, and signals in another frequency band to another destination. Downstream VHF signals from the combiner are routed to cable 200, while upstream signals from cable 200 are routed to Sub-Low to VHF Processor 130. Signal routing is facilitated by the fact that the VHF frequency band and the sub-low frequency band are separated by more than 15 MHz. Upstream signals in the sub-low frequency band are multiplexed into a predetermined channel in the VHF frequency band. In this way, upstream TV signals from a single subscriber may be broadcast downstream to all subscribers.

Along cable 200 it is necessary to amplify both the upstream and the downstream signals. This is accomplished by amplifier 210 for upstream signals and amplifier 230 for downstream signals. Diplexers 220 route the upstream and downstream signals to the appropriate amplifier. Contained within the amplifier housing is an additional amplifier called a bridger amplifier which is used to develop distribution lines which actually serve the customers. At the output of the bridger amplifier, it is possible to split into one, tow, three or four individual ports via a device called a feedermaker. The feedermaker is primarily a passive splitter except in the case of the single port device which serves as a passive jumper. The feeder switch is inserted in series with the output of the feedermaker. A four-way splitter (feedermaker) is a passive device which functions in the downstream direction to deliver one-quarter (-7 dB) of the signal at its input port to each of its output ports.

Continuing along cable 200, power splitter 240, sometimes called a coaxial splitter, is a passive device which functions in the downstream direction to deliver half of the signal at input port 1 onto each of output ports 2 and 3. To maximize power transfer between the input and output ports, it is important that all source and terminating impedances be matched at their characteristic impedance, which in the case of CATV is 75 ohms Furthermore, power splitter 240 is a bidirectional device in which ports 2 and 3 are inputs in the upstream direction, and half of the power into each of those input ports is delivered to output port 1. Feeder switch 50 is connected to power splitter 240 over cable 211. Feeder switches are typically located in the trunk amplifiers on utility poles or pedestal mounts, external to the residence location, and are capable of serving four subscribers in the present embodiment. Feeder lines 201, 202, 203 and 204 each serve a different subscriber. In the preferred embodiment of the present invention, means are provided within the feeder switch 50 to determine that a carrier signal is present in the frequency band assigned to upstream signals. In response, a high pass filter is switched out of the upstream path and a direct connection is switched in. However, the feeder switch could just as easily be made responsive to a data signal, from either the headend or the subscriber, which changes the filter configuration within the feeder switch to allow upstream transmission.

FIG. 2 illustrates the assignment of frequencies to various channels in a conventional CATV system. The frequency band 5-37 MHz is known as the sub-low frequency band and presently comprises a maximum of 5 channels, designated T7-T11, each having a nominal band width of 6 MHz. The T7 channel (5.75-11.75 MHz) is not recommended for transmitting a TV signal because of noise from a number of sources (e.g., fluorescent lights) seems to fall into the T7 slot. The sub-low frequency band is used for upstream transmission of television signals over CATV facilities. Television channels 2 through 4 occupy the frequency band 54-72 MHz, and channels 5 and 6 occupy the frequency band 76-88 MHz. Channels 2 - 6 reside in the lower portion of the VHF frequency band, while the rest of the channels between 00 and 62 occupy the higher frequency portion of the VHF band between 108 MHz and 456 MHz. Each of these channels comprises a nominal band width of 6 MHz and is used for the transmission of video information. Separating the lower and upper portions of the VHF band is the frequency band 88-108 MHz which is reserved for the transmission of FM radio signals and downstream data. It is noted that the frequencies used for transmission over cable do not necessarily correspond to the frequencies used for over-the-air broadcast.

### THERMAL NOISE CONSIDERATIONS

In a two-way CATV system each subscriber is able to transmit signals back to the CATV headend. These "upstream" signals typically use frequencies in the band 5-37 MHz. The upstream signal distribution network is in the form of a "merging tree topology" in which the signals generated by many sources, or subscribers, converge and are transmitted over a single transmission line back to the CATV headend. Such techniques as signal multiplexing and frequency diversity are well known for accommodating large numbers of subscribers in two-way CATV systems. Also well known is the problem of noise build up in the upstream direction.

The theoretical noise level in a 4 MHz bandwidth for an ideal amplifier, terminating its source of 75 ohms, is -56 dBmv. This is made of two noise sources. One noise source (eₙ = 4KTBR = -59 dBmv for an open circuited resistor) is due to the resistance of the cable where:
- K: = Boltzman's Constant (1.38 x 10⁻²³)
- T: = Absolute Temperature (300° Kelvin)
- B: = Bandwidth (4 x 10⁶ Hz)
- R: = Resistance (75 Ohms)
The other noise source is due to the input terminating resistance of the amplifier which is also -59 dBmv. Naturally, amplifiers are not perfect and include other noise sources due to random electron motion within its components. This increase in noise is generally expressed in decibels (dB) and is known as the Noise Figure of the amplifier. A 10 dB Noise Figure for the amplifier leads to a noise level of -46 dBmv at the amplifier output, and would not be uncommon.

### Downstream

As discussed above, in the downstream direction, one TV signal is broadcast in a particular frequency band. As shown in FIG. 3 TV signal S₁, along with noise component N₁, is received at port 1 of power splitter 240. Equal portions of this signal are delivered to downstream output ports 2 and 3 for the purpose of delivering one TV signal to two destinations. Neglecting small dissipation losses within the splitter, one-half of the signal and noise are delivered to ports 2 and 3 as indicated in FIG. 3. Accordingly, the signal-to-noise ratio (S/N) is unchanged between port 1 and ports 2 or 3 except for the addition of a small amount of random thermal noise generated by the components (e.g., resistance) within the power splitter 240 itself. Similarly, amplification of the downstream signal boosts S₁ and N₁ by the same amount; so S₁/N₁ is substantially unchanged between input and output ports of the amplifier.

### Upstream

Upstream signals pass through the same power splitters as the downstream signals do, but in the reverse direction. Further, to avoid clashing, only one subscriber at a time is granted access to a particular upstream frequency band on the same trunk. This situation is illustrated in FIG. 4 in which the subscriber connected to port 2 of the power splitter 240 is transmitting signals. Although the subscriber connected to port 3 is not transmitting a signal, his equipment terminates in a 75 ohm resistive impedance which generates thermal noise N₂ in the same frequency band that the subscriber connected to port 2 is presently using. Accordingly, the resulting signal at upstream output port 1 has twice as much noise as was present at upstream input port 2 and the S/N is, therefore, decreased by 3 dB. Indeed, so much noise accumulates in the upstream direction, due to the cumulative effect of multiple power splitters, that bidirectional TV signal transmission has not gained popularity. In those situations where a TV studio needs to deliver a TV signal to the headend for distribution, a separate cable is typically used -- far too expensive for many high schools seeking to provide community service programming.

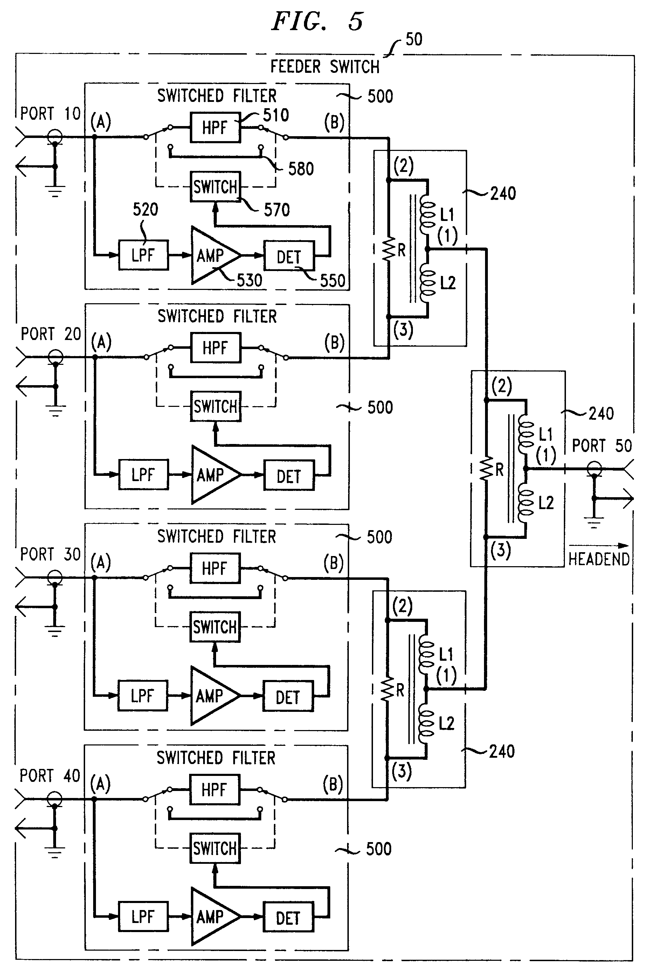

FIG. 5 discloses the design of feeder switch 50 which comprises a plurality of power splitters 240 and a plurality of switched filters 500. In the preferred embodiment of the invention, a cluster of four switched filters are used, although it is clear that a greater or lesser number might be selected by the designer to meet certain specific needs. It is noted that input and output impedances for each of the devices 240, 500 is selected to match that of the coaxial cable (75 ohms) intended to be connected to each of ports 10, 20, 30, 40 and 50.

In the drawing of FIG. 5, the design of power splitter 240 is revealed in greater detail. As discussed earlier, half of the power that enters port 1 of splitter 240 is delivered to each of ports 2 and 3. This is accomplished with the series connection of inductors L1, L2 in parallel with resistor R (150 ohms). L1 and L2 are wound in a series-aiding configuration so that signals entering port 2 are not coupled to port 3 and vice versa. Such power splitters are well known and used by consumers to distribute incoming television signals to several different television sets. As shown in FIG. 5, these power splitters can be connected in pyramid fashion, but for maximum power transfer, each of the ports should be terminated in 75 ohms.

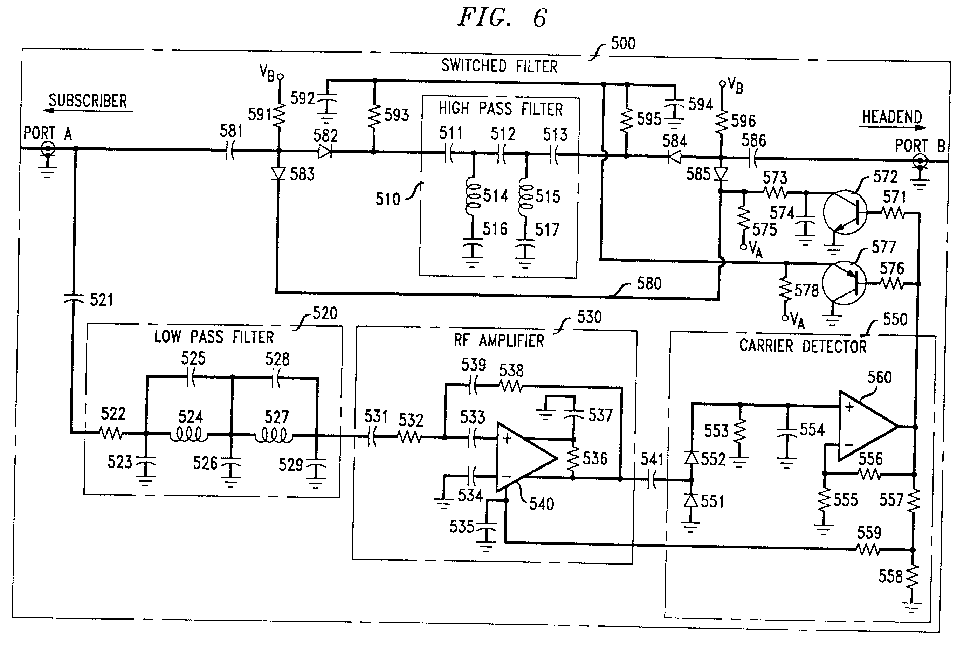

The more significant portion of FIG. 5 resides in the design of switched filter 500, connected to individual subscribers at ports 10, 20, 30 and 40 over a 75 ohm cable section known as a feeder line. The design of switched filter 500 is shown in block diagram form to facilitate understanding, although greater detail is presented in connection with FIG. 6. TV signals in the VHF band propagate downstream from port B to port A of switched filter 500. High pass filter 510 passes these VHF signals but does not effectively pass signals below the VHF band. Each of the switched filters is shown in its normal operating mode - which is with high pass filter 510 connected between ports A and B. However, when one of the subscribers, attached to ports 10, 20, 30 or 40, commences transmission of a TV signal in the upstream frequency band, that upstream signal passes through low pass filter 520, is amplified by RF amplifier 530, and is detected by detector 550 which causes switch 570 to operate. When switch 570 is operated, direct connection 580 replaces high pass 510 as the operative connection between ports A and B.

A number of design alternatives exist to the replacement of the high pass filter 510 with direct connection 580. One alternative would be to add the direct connection without removing the high pass filter; however, low impedance paths to ground would exist through series-connected components 514, 516 and through series-connected components 515, 517 at their respective series resonant frequencies. Another alternative would be to add a filter that passes the sub-low frequency band in parallel with the high pass filter; however, this would cost more than direct connection 580. Yet another alternative would be to replace the high pass filter with the filter that passes the sub-low frequency band; however, upstream transmission would be lost and two-way video telephony could not take place. Each of these alternatives may, nevertheless, be desirable in a particular application, and all are within the scope of the present invention for which the preferred embodiment is disclosed below in greater detail.

FIG. 6 discloses a detailed schematic of switched filter 500 which comprises several sections. Recall that the purpose of the switched filter is to shut down the sub-low frequency band on all feeder lines with no upstream communication. This is best done within feeder switch 50, and more particularly by the addition of a switched filter circuit 500 for each subscriber. The operation of the switched filter circuit will be better understood when two modes of operation are identified: (i) downstream transmission only, (ii) downstream and upstream transmission.

When transmission is in the downstream direction only, high pass filter 510 is basically the only functional circuit. This is accomplished by forward biasing diodes 582 and 584, while reverse biasing diodes 583 and 585. Accordingly, signals in the VHF frequency band enter port B, propagate through high pass filter 510, and continue toward the subscriber via port A. In this particular path, coupling capacitors 581, 586 are used to block DC current flow between the switched filter and the cables which are connected to ports A and B. High pass filter 510 is a fifth-order, Chebyshev filter whose cutoff frequency is 50 MHz. High pass filter 510 comprises components 511-517 which provide a relatively low impedance to signals at or above 50 MHz, but relatively high impedance otherwise. Forward biasing diodes 582 and 584 is accomplished when transistor 577 is turned on. Current flows from 12-volt source V_{B}, through resistors 591 and 596, through diodes 582 and 584, through resistors 593 and 595, and hence through "on" transistor 577 to ground. Capacitors 592 and 594 provide an AC ground for the VHF signals and resistor 578 is used for connection to 24-volt source V_{A} which keeps diodes 582 and 584 reverse biased when transistor 577 is in its off condition. PIN diodes 582-585 are silicon, RF switching diodes having low loss in the VHF frequency band. A suitable PIN diode is the BA582 switching diode which is commercially available from Siemens.

When transmission proceeds in both the upstream and downstream directions, transistor 577 is turned off while transistor 572 is turned on. In this situation, PIN diodes 583 and 585 are forward-biased while diodes 582, 584 are reverse-biased. High pass filter 510 is therefore removed from the path between ports A and B, and replaced by direct connection 580 which not only passes the frequencies at or above 50 MHz, but also passes the frequencies in the sub-low frequency band used for upstream transmission. It is noted that the anode side of each of the PIN diodes is attached to the 12-volt source while the cathode side of these diodes is returned to the switched 24-volt source so that they can be suitably reverse-biased when it is desirable to turn then off. It is also noted that these diodes are turned on and off in pairs controlled by transistors 572 and 577 which respond to the same output signal from amplifier 560, but assume different logical states in response to the same input. Thus, during upstream transmission, a direct connection is made between ports A and B which bypasses the high pass filter 510. This condition is triggered when signals in the sub-low frequency band entering port A are detected by carrier detector 550. Coupling capacitor 521 connects low pass filter 520 to port A. Low pass filter 520 is a fifth-order, Chebyshev filter whose cutoff frequency is 37 MHz. Low pass filter 520 comprises components 522-529 which pass frequencies below the VHF frequency band, and in particular, frequencies in the frequency band 5-37 MHz. RF amplifier 530 comprises components 531-540. A suitable component for amplifier 540 is a commercially available IF amplifier such as the MC1350P. Capacitor 541 then couples the amplified signal from the RF amplifier 530 to carrier detector 550, and in particular to germanium diodes 551-552, configured as a voltage doubling rectifier, which demodulates the input signal through half-wave rectification. The rectified signal is then filtered by resistor 553 and capacitor 554 and presented to amplifier 560 - a conventional operational amplifier such as the LM324. Part of the rectified and amplified signal is fed back to RF amplifier 530 via resistors 557, 559 and capacitor 535 to provide negative feedback, and hence automatic gain control, for RF amplifier 530. The output of operational amplifier 560 is in its high (positive with respect to ground) state when an upstream signal is present, and in its low (ground) state otherwise. When amplifier 560 is high, transistor 572 is saturated and transistor 572 is off which, as discussed earlier, causes a low impedance path (direct connection) to be connected between ports A and B. Such low impedance connections are sometimes known as "shunts." Resistors 571 and 576 at the base to transistors 572, 577 respectively, are used to limit the maximum base current that can flow through these transistors. Components 573, 574 and 575 are selected for bias considerations and to eliminate unwanted RF signals.

Although a particular embodiment has been shown and described, it is understood that various modifications can be made within the spirit and scope of the invention. These modifications include, but are not limited to, the use of any predetermined control signal to enable the transmission of upstream signals. The predetermined control signal may be transmitted by the subscriber, the headend, or another selected location. Finally, the predetermined control signal need not reside in the sub-low frequency band, as presently contemplated, but may be at VHF at baseband. Similarly, transmission in the upstream direction may occur in any frequency band(s).

## Claims

1. A bidirectional cable television distribution system comprising a headend (10) for transmitting television signals downstream in a first frequency band to one or more subscriber stations over a cable (200), and simultaneously receiving television signals in a second frequency band that are transmitted upstream by one of the subscriber stations (30) over the cable, said cable including feeder apparatus (500) which is series-connected between the headend and said one of the subscriber stations, the feeder apparatus including a first port (B) for interconnection with the headend and a second port (A) for interconnection with the station, the feeder apparatus
CHARACTERIZED BY:
filter means (510), interconnected between the first and second ports, for simultaneously enabling the transmission of signals in the first frequency band while precluding the transmission of signals in the second frequency band; and
switching means (520, 530, 550, 570, 580), responsive to a predetermined control signal received by the feeder apparatus, for enabling the transmission of signals in the second frequency band between the first and second ports; whereby the feeder apparatus precludes upstream transmission of noise in the second frequency band unless it receives the predetermined control signal.

2. The cable distribution system of claim 1 wherein the filter means (510) comprises a high pass filter.

3. The cable distribution system of claim 3 wherein the switching means (520, 530, 550, 570, 580) includes means (550) for detecting a signal generated by said one subscriber station (30); and means (580) for effectively shunting the high pass filter with a low impedance path for frequencies in the second frequency band.

4. The cable distribution system of claim 3 wherein said low impedance path substantially comprises a direct connection (580).

5. The cable distribution system of claim 2 wherein the first frequency band substantially extends between 50 MHz and 450 MHz.

6. The cable distribution system of claim 3 wherein the second frequency band substantially extends between 5 MHz and 37 MHz.
